# EUROPÄISCHE PATENTSCHRIFT

(11) **EP 0 517 044 B1**
(45) Veröffentlichungstag und Bekanntmachung des Hinweises auf die Patenterteilung: **21.06.1995**
(21) Anmeldenummer: 92108644.3
(22) Anmeldetag: 22.05.1992
(51) Int. Cl.: C08G 64/24, C08G 64/14

(54) **Kontinuierliche Herstellung von Polycarbonaten**
Continuous preparation of polycarbonates
Préparation en continue de polycarbonates

(30) Priorität: 04.06.1991 DE 4118232
(43) Veröffentlichungstag der Anmeldung: 09.12.1992
(73) Patentinhaber: BAYER AG, 51368 Leverkusen (DE)
(72) Erfinder: Wulff, Claus, Dr., W-4150 Krefeld 1 (DE); Kauth, Hermann, Dr., W-4150 Krefeld 1 (DE); Weymans, Günther, Dr., W-5090 Leverkusen 1 (DE); Kricsfalussy, Zoltan, Dr., W-5090 Leverkusen 1 (DE); Alewelt, Wolfgang, Dr., W-4150 Krefeld 12 (DE); Heuser, Jürgen, Dr., W-4150 Krefeld 1 (DE)

(56) Entgegenhaltungen:
- EP-A- 0 304 691
- EP-A- 0 306 838
- DE-A- 2 725 967
- US-A- 3 674 740
- US-A- 5 037 941
- US-A- 5 043 203
- SCHNELL,H. 'Chemistry and Physics of Polycarbonates' 1964 , INTERSCIENCE PUBLISHERS , NEW YORK

## Beschreibung

Gegenstand der vorliegenden Erfindung ist ein Verfahren zur kontinuierlichen Herstellung von Polycarbonaten nach der Methode des Zweiphasengrenzflächenverfahrens aus
a) Diphenolen
b) Phosgen
c) gegebenenfalls Kettenabbrechern,
d) gegebenenfalls Katalysatoren und gegebenenfalls
e) Verzweigern,
in einem Gemisch aus wäßrig-alkalischer Phase und organischer Lösungsmittelphase, indem man
1. kontinuierlich die organische Phase und die wäßrige Phase in einem Rohr unter Verwendung eines Mischers zusammenführt,
   1.1 wobei die organische Phase ein für das Polycarbonat geeignete Lösungsmittel ist und bereits das Phosgen enthält.
   1.2 wobei die wäßrige Phase aus Wasser und einem Gemisch von Alkalihydroxid und phenolischen Komponenten besteht, so daß gerade soviel Alkalihydroxid vorliegt, wie für das Lösen der phenolischen Komponenten bei den Reakionstemperaturen und -drücken erforderlich ist, und
   1.3 wobei die Phasenverhältnisse organische Phase/wäßrige Phase so eingestellt sind, daß sich bei der anschließenden Phosgenreaktion eine Wasser-in-Öl-Emulsion bildet, wobei pro Mol phenolischem OH 0,5 bis 0,7 Mol Phosgen eingesetzt werden,
2. die Bildung von Chlorkohlensäureester-Gruppen am Absorptionsmaximum der Chlorformyl-Bande im IR-Spektrum (aufgenommen mittels der abgeschwächten, totalen Reflexion-IR-Methode) verfolgt, und dabei beim Erreichen der maximalen Chlorkohlensäureesterkonzentration oder bis zu 5 Sekunden danach, Alkalilauge nachdosiert, und zwar so, daß sich eine OH⁻-Konzentration zwischen 0,1 und 0,5 Gew.-% in der wäßrigen Phase einstellt, und gegebenenfalls
3. anschließend das Polycarbonatoligomere mit Polykondensationsgraden von 3 bis 10 Struktureinheiten nach bekannten Verfahren unter Zugabe von Katalysatoren zum hochmolekularem Polycarbonat mit mittleren Gewichtsmittelmolekulargewichten von 5 000 bis 80 000 g/Mol, gemessen in bekannter Weise mittels Gelpermeationschromatographie aufkondensiert, wobei
4. die Emulsion vor, während oder nach der Katalysatorzugabe in eine Öl-in-Wasser-Emulsion umkippt, welche in bekannter Weise aufgetrennt und aufgearbeitet wird.

Kontinuierliche Verfahren zur Herstellung von Kondensaten unter Verwendung von Phosgen - beispielsweise die Herstellung von aromatischen Polycarbonaten, oder Polyestercarbonaten oder ihrer Oligomeren - nach dem Zweiphasen-Grenzflächenverfahren haben in der Regel den Nachteil, daß zur Beschleunigung der Reaktion und/oder zur Verbesserung der Phasentrennung mehr Phosgen eingesetzt werden muß als für die Produktbilanz notwendig ist. Der Phosgen-Überschuß wird dann in der Synthese in Form von Nebenprodukten - beispielsweise zusätzliches Kochsalz oder Alkalicarbonat-Verbindungen - abgebaut.

Beispielsweise werden für das kontinuierliche Zweiphasen-Grenzflächen-Verfahren zur Herstellung von aromatischen Polycarbonaten nach dem Stand der Technik ein Phosgenüberschuß - bezoge auf das eingesetzte Diphenolat - von 20 bis 60 Mol-% eingesetzt.

So beschreibt die DE-A-2 305 144 ein Verfahren zur kontinuierlichen Herstellung von Polycarbonaten, in dem die beiden reaktiven Phasen in Gegenwart von Aminen in einer Mischzone bei im wesentlichen Öl-in-Wasser-Emulsionsverhältnissen zusammengebracht und die Phosgenierung in einer Reaktionsstrecke nach Vermischen abläuft. Spezielle strömungstechnische Anordnungen sollen dafür sorgen, daß die Raum-Zeit-Ausbeute der Reaktion gesteigert wird. Nachteilig ist die große Menge wäßriger Phase, die Phosgen-Nebenreaktionen unterstützt.

Nach der DE-A-2 353 939 sollen die Eigenschaften eines Polycarbonats, hergestellt nach dem Zweiphasengrenzflächenverfahren, durch Steuerung der Reaktion mit einer pH-Wert-Regelung verbessert werden können. Nachteilig ist der dabei eingesetzte Phosgenüberschuß. Das Verfahren ist außerdem nicht-kontinuierlich.

Nach der Lehre der EP-A-0 282 546 sollen Kondensate mit Chlorformyl-Endgruppen mit guter Phosgenausbeute dadurch nach dem Zweiphasengrenzflächen-Verfahren hergestellt werden können, daß man in eine vorgelegte organische Phase gleichzeitig eine stabile Diphenol-Wasser-Natronlauge-Suspension und Phosgen kontinuierlich einmischt und das Reaktionsprodukt anschließend isoliert. Während der Reaktion werden pH-Werte zwischen 2 und 5 eingestellt. Nachteilig sind technische Schwierigkeiten bei der Dosierung der Suspension und der geringe pH-Wert, der die Phosgenierungszeit erheblich erhöht.

Aus der EP-A-0 263 432 ist zu erfahren, daß Kondensate mit Chlorformyl-Endgruppen oder Polycarbonate aus wäßriger Diphenolatlösung und organischer Lösung dadurch hergestellt werden können, daß man bei pH-Werten zwischen 8 und 11, Temperaturen zwischen 15° und 50°C und einem Phosgenüberschuß von mindestens 10 Mol-% Phosgen in eine heterogene Mischung einmischt und die Phosgenierung unter gleichzeitigem Nachdosieren von Alkali- oder Erdalkalilaugen fortführt.

Aus der DE-A-2 725 967 geht die Lehre hevor, daß es für die Phosgenausbeute eines kontinuierlichen Verfahrens günstig ist, wäßrige und organische Phase, die Phosgen gelöst enthält, zunächst in einem Rohr zusammenzuführen und dann in einen Reaktor vom Tanktyp einzuführen. Die Verweilzeit in diesem Rohr sollte zwischen 0,5 und 15 Sekunden betragen. Der Phosgenüberschuß der Reaktion beträgt mindestens 10 Mol-%. Nachteilig ist der immer noch recht hohe Phosgenüberschuß. Außerdem hat das Verfahren den Nachteil, daß die Phosgenierung bei ungünstigen Phasenverhältnissen (Öl zu Wasser = 0,2 bis 1) stattfindet, damit die Trennung der beiden Phasen nach Abschluß der Reaktion sicher möglich ist.

Nach der EP-A-0 306 838 A2 wird die Phosgenierung unter Verwendung eines automatischen Chlor-Detektors in-situ überwacht. Durch diese Prozeßführung werden Schwankungen im Chemismus der Reaktion unterdrückt und die technischen Eigenschaften der Polycarbonate angeblich deutlich verbessert. Der Grundgedanke des Verfahrens besteht darin, nicht abreagiertes Diphenolat in den Prozeß zurückzuführen. Nachteilig sind allerdings die Phosgen-Nebenreaktionen, die sich auch in dieser Rückführungsmaßnahme äußern.

Nach der EP-A-0-339 503-A2 ist bekannt, daß die Phosgen-Nebenreaktionen insbesondere dadurch erhöht werden, daß eine hohe Natronlauge-Anfangskonzentration vorliegt. In dieser Patentschrift wird daher die Diphenol-Natronlauge-Wasser-Lösung im Alkal-Hydroxy-Verhältnis von unter 2:1 (Alkalilauge-Unterschuß) mit der organischen Phase zusammengeführt, wobei sich in dieser ersten Reaktionsstufe Oligomere mit Molekulargewicht zwischen 300 und 3 000 g/mol bilden. Die Phasenverhältnisse Wasser zu Öl sind größer als 1. Außerdem sind die Phosgen-Nebenreaktionen immer noch recht ungünstig.

Aus der EP-A-304 691 ist bereits ein kontinuierliches Phasengrenzflächenverfahren zur Herstellung von Polykarbonaten ausgehend von Diphenolen und Phosgen bekannt. Hierbei wird eine wäßrige Phase aus Diphenolen und der gerade notwendigen Menge Alkalihydroxyd mit einer Phosgen enthaltenen organischen Phase in einem Rohr unter Verwendung eines Mischers zusammengeführt. Das OH/Phosgenverhältnis liegt bei 0,65 mol (Beispiel 2). Aufgrund der Mengenverhältnisse der Lösungsmittel ergibt sich zwangsläufig eine Wasser-In-Öl-Emulsion. Am Ende der Reaktion wird Natronlauge eingespeist. Hiervon unterscheidet sich das anmeldungsgemäße Verfahren im wesentlichen durch den anspruchsgemäßen Verfahrensschritt 2. So offenbart dieser Stand der Technik nicht die Messung der maximalen Chlorkohlensäureesterkonzentration mittels IR-Spektrum noch die Steuerung des Zugabezeitpunkts der Alkalilauge in Abhängigkeit hiervon noch die anspruchsgemäß zugegebene Menge Alkalilauge.

Es bleibt also festzuhalten, daß die Herstellung von Kondensaten oder Polykondensaten nach dem Zweiphasengrenzflächenverfahren bisher kontinuierlich entweder nur mit hohem Phosgenüberschuß oder in ungünstigen Phasenverhältnissen (Wassereinsatz) oder mit Phasentrennproblemen möglich war. Erfindungsgemäß wurde nun gefunden, daß Phosgen-Nebenreaktionen bei der kontinuierlichen Herstellung von Polycarbonaten nach dem Zweiphasen-Grenzflächenverfahren vermieden werden.

Gemäß nicht vorveröffentlichter US-A-5043203 (= EP-A-0456052) wird ebenfalls Polycarbonat in mehreren Stufen synthetisiert. Im Unterschied zum Verfahren der vorliegenden Erfindung wird vorher keine Bisphenolat-Lösung separat gebildet. Durch diesen Unterschied ist das Verfahren der US-A-5043203 für eine kontinuierliche Fahrweise unseres Erachtens nicht geeignet, auch wenn in Spalte 5, Zeile 6 des US-Patents diese Möglichkeit erwähnt wird.

Die nach dem erfindungsgemäßen Verfahren erhältlichen Polycarbonte sind einerseits Oligocarbonate mit Polykondensationsgraden von 3 bis 10 Struktureinheiten oder Polycarbonate mit höherem Molekulargewicht, also mit mittleren Gewichtsmolekulargewichten von 5 000 bis 80 000 g/Mol, gemessen in bekannter Weise mittels Gelpermeationschromatographie.

Die einzustellenden Molekulargewichte lassen sich durch die Menge an Kettenabbrecher oder im Falle, daß man ohne Kettenabbrecher und ohne Katalysator arbeitet, durch die Reaktionszeit und die Phosgenmenge, bezogen auf Diphenolmenge, kontrollieren.

Geeignete Diphenole für das erfindungsgemäße Verfahren sind Diphenole der Formel HO-Z-OH, in denen Z ein aromatischer Rest mit 6 bis 30 C-Atomen ist, der einen oder mehrere aromatische Kerne enthalten kann, substituiert sein kann und aliphatische Reste oder cycloaliphatische Reste oder Heteroatome als Brückenglieder enthalten kann. Beispiele sind
Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfone
Bis-(hydroxyphenyl)-sulfoxide
α,α-Bis-(hydroxyphenyl)-diisopropylbenzole sowie deren kernalkylierte und
kernhalogenierte Verbindungen.

Diese und weitere geeignete andere Diphenole sind z.B. in den US-A-3 028 365, 2 999 835, 3 148 172, 3275 601, 2 991 273, 3 271 367, 3 062 781, 2 970 131 und 2 999 846, in den DE-A-1 570 703, 2 063 050, 2 063 052, 2 211 956, der FR-A-1 561 518 und in der DE-A-3 833 953 beschrieben. Bevorzugte Diphenole sind insbesondere 2,2-Bis-(4-hydroxyphenyl)-propan, 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethyl-cyclohexan. Es sei hier betont, daß das erfindungsgemäße Verfahren praktisch für alle bekannten Diphenole eingesetzt werden kann, die sich in Anwesenheit von Alkalilauge und Wasser in einer wäßrigen Phase lösen.

Den Diphenolen können entweder vor, wahrend oder nach der Phosgenierung die bekannten Mengen und Arten von Kettenabbrechern oder Verzweigern zugeführt werden.

Geeignete Kettenabbrecher und Verzweiger sind literaturbekannt (siehe beispielsweise DE-A-3 833 953). Bevorzugte Kettenabbrecher sind Phenol, Cumylphenol, Isooctylphenol, para-tert.-Butylphenol. Bevorzugte Verzweiger sind Trisphenole und Tetraphenole sowie 3,3-Bis-(3-methyl-4-hydroxyphenyl)-2-oxo-2,3-dihydroindol.

Als Alkalilauge werden Natronlauge oder Kalilauge eingesetzt. Gegebenenfalls können auch Erdalkalilaugen eingesetzt werden.

Die organische Phase enthält, wie bereits erwähnt, im wesentlichen ein das Polycarbonat bei den Reaktionstemperaturen und Reaktionsdrücken lösendes - mit Wasser im wesentlichen nicht mischbares - Medium wie z.B. Methylenchlorid oder Mono-Chlorbenzol. Bevorzugtes Medium ist im wesentlichen reines Methylenchlorid oder ein Gemisch Methylenchlorid/Chlorbenzol. Die organische Phase enthalt vor Zusammenbringen mit der wäßrige Phase bereits das Phosgen gelöst.

Die wäßrige Phase ist ein Gemisch aus Alkalilauge, Diphenol und Wasser und gegebenenfalls dem Kettenabbrecher und gegebenenfalls dem Verzweiger. Entscheidend ist, daß vor dem Zusammenbringen der wäßrige Lösung mit der organischen - Phosgenhaltigen - Lösung die wäßrige Phase nur soviel Alkalilauge enthält, wie für das Lösen phenolischer Komponenten in der wäßrigen Phase gerade erforderlich ist. Dies ist bekanntlich abhängig von den Reaktionstemperaturen und den gewünschten Diphenol-Konzentrationen; die Mengen an Kettenabbrecher und Verzweiger können vernachlässigt werden. Für eine vorgegebene Reaktionstemperatur und Diphenol-Konzentration kann der Fachmann durch einfache Löslichkeitsversuche, in denen die Alkalilaugenmenge variiert wird, diese für das erfindungsgemäße Verfahren notwendige optimale Zusammensetzung der wäßrigen Phase bestimmen.

Diphenol wird in der wäßrigen Eingangsphase in solchen Mengen zugegeben, daß das Diphenolat nicht ausfällt, im allgemeinen zwischen 10 und 20 Gew.-% Diphenolat, bezogen auf die Gesamtmenge wäßrige Phase.

Die Phasenverhältnisse wäßrige Phase und organische Phase hängen gewichtsmäßig von den eingesetzten Stoffen (z.B. Lösungsmittel) ab. Sie sind im allgemeinen so zu wählen, daß die wäßrige Phase zwischen 20 und 58 Vol.-%, die organische Phase zwischen 80 und 42 Vol.-% liegt. In den Fällen, wo hohe "Öl-zu-Wasser"-Phasenverhältnisse eingesetzt werden, ist es für die nachfolgenden Reaktionsstufen gegebenenfalls erforderlich, wäßrige Phase - gegebenenfalls anderer Zusammensetzung - nachzudosieren. Die Phasenverhältnisse sind so gewählt, daß sich bei der Phosgenierung eine "Wasser-in-Öl"-Emulsion einstellt und ohne wesentliche Nachdosierung nach Abschluß der Reaktion im Zuge der Polykondensation eine "Öl-in-Wasser"-Emulsion bildet. Auch in diesem Fall sind die genauen Phasenverhältnisse für diese Fahrweise abhängig von den Einsatzstoffen. Sie liegen im allgemeinen bevorzugt zwischen 42 und 58 Vol.-% wäßrige und 58 und 42 Vol.-% organische Phase.

Die wäßrige und organische Phase werden unter Verwendung eines Mischers kontinuierlich in einem Rohr zusammengeführt. Geeignete Mischer sind alle Vorrichtungen, die zwei Substanzen in einem Rohr zusammenbringen. Dabei kommt es nicht notwendigerweise auf die Mischleistung dieser Vorrichtung an. So kommen also beispielsweise Mischorgane wie z.B. spezielle Düsen oder statische Mischer in Frage. Als Mischdüsen sind insbesondere geeignete Zweistoffdüsen mit einer Verweil- und Mischzeit von mindestens 20 Millisekunden wie z.B. Vollkegeldüsen, Hohlkegelexzenterdüsen, Axialhohlkegeldüsen, Pneumatik-Zerstäuberdüsen und Ringlochdüsen. Geeignet sind als statische Mischer bevorzugt statische Mischer vom Typ BKM. Wie bereits betont, ist darauf zu achten, daß für das gewählte Mischorgan die Phasenverhältnisse so eingestellt werden, daß nach der Mischung - wenigstens kurzzeitig - eine Wasser-in-Öl-Emulsion vorliegt.

Die ATR-IR-Methode verwendet das physikalische Prinzip der totalen abgeschwächten Reflexion, wobei in einem länglichen IR-Kristall, dessen Oberfläche mit der reaktiven Wasser-in-Öl-Emulsion in Berührung kommt, auf der einen Seite Laserlicht vorgegebener Wellenlänge eingespeist und am anderen Ende Laserlicht - modifiziert durch die organische Oberflächenbelegung des Kristalls - herauskommt und in einem Fourier-Transform-Infrarotgerät - z.B. der Firmal Nicolet - analysiert wird. Als Indikator wird die Chlorformylbande (Streckschwingung der CO-O-Längenbindung, der O-CO-Cl-Gruppe) im Wellenzahlbereich zwischen 1 100 und 1 200 cm als relatives Maß verwendet. Auf diese Weise kann durch Anbau der ATR-IR-Methode an jeder Stelle eines Strömungsrohrs, durch das die beiden reaktiven (Phosgenhaltigen) Lösungen strömen, ein Maß für die relative Bischlorkohlensäureester-Konzentration on-line bestimmt werden.

Die Nachdosierung von Alkalilauge erfolgt erfindungsgemäß erst im Maximum oder bis zu 5 Sekunden nach Durchschreiten des Maximums des so charakterisierten Chlorkohlensäureester haltigen Zweiphasengemisches. Praktischerweise kann man die optimale Dosierstelle in einer technischen Anlage dadurch bestimmen, daß man z.B. zunächst in einem Diskonti-Versuch (Ablauf der Reaktion in einem Rührkessel) die Zeit bis zum Erreichen der maximalen Kohlensäurekonzentration bestimmt und diese Verweilzeit für die Detaillokalisierung der optimalen Alkalilauge-Nachdosierstelle in der technischen Anlage verwendet. Wie bereits beschrieben, soll diese Alkalilauge-Nachdosierung frühestens mit Erreichen der maximalen Chlorkohlensäureesterkonzentration beginnen. Es kann - abhängig von den Einsatzstoffen und der Kinetik dieser Stoffe unterainander - gegebenenfalls nützlich sein, diese Nachdosierung erst 1 bis 5 Sekunden nach Erreichen des ATR-IR-Absorptionsmaximums zu beginnen und z.B. die Alkalilauge-Dosierstelle am Ende des Strömungsrohres oder in dem für das weitere Verfahren verwendeten Reaktionsgefäß (Rührkessel, Umpumpenreaktor, Schlangenrohrreaktor usw). anzubringen. Bevorzugt sollte der zeitliche Abstand zwischen Erreichen der maximalen Chlorkohlensäureesterkonzentration und der Alkalilauge-Nachdosierung nicht mehr als 3 Sekunden betragen.

Die Menge an nachdosierter Alkalilauge beträgt im allgemeinen bis zu weiteren 2 Mol Alkalilauge pro Mol eingesetztem Diphenol. Sie richtet sich auch nach den einzustellenden pH-Werten zwischen 9 und 14, um die weitere Reaktion zum Oligomeren und Polymeren fortzuführen. Der Vorteil des erfindungsgemäßen Verfahrens ist, daß durch den Zeitpunkt der Nachdosierung Phosgennebenreaktionen während der Phosgenierung unterdrückt und die Phosgenausbeute gesteigert wird.

Die nach dem erfindungsgemäßen Verfahren erhältlichen hochmolekularen Polycarbonate sind bekannte Kunststoffe, die in üblicher Weise zu beliebigen Formkörpern, beispielsweise zu Folien oder Platten, verarbeitet werden können und die für Polycarbonate übliche technische Verwendung beispielsweise auf dem Elektrosektor finden oder als Abdeckungen und Verblendungen im Hausbau und auf dem Sicherheitssektor.

### Erfindungsgemäßes Beispiel 1:

Folgende Konti-Reaktion wurde verwendet:
- Verfahrensschritt 1:: eine Ringlochdüse, in welcher die wäßrige Phase durch die Radiallöcher mit der organischen Lösung im Kern der Düsen zusammengeführt wird.
- Verfahrensschritt 2:: Ein Strömungsrohr, Durchmesser ca. 25 mm, mit einer Länge von etwa 1 m
Ein Umpumpreaktor, ausgestattet mit einem T-Stück, in welchem das o.g. Strömungsrohr mündet, einer Pumpe, einem Wärmetauscher, einem Überlaufbehälter und einer T-Förmigen Entnahmestelle mit einem Gesamtvolumen von etwa 45 l.

Im Verfahrensschritt 1 werden folgende Stoffe eingesetzt:
118,1 kg/h 15 Gew.-%ige Diphenol-Lösung, die als Diphenol-2,2'-bis-(4-hydroxyphenyl)-propan (Bisphenol-A) und 2 Mol Natronlauge pro Mol Diphenol enthält und bei 25°C unter Normaldruck vorliegt.
8,5 kg/h Phosgen (10 Mol.-% Überschuß)
113,0 kg/h Lösungsmittelgemisch aus 50 Gew.-% Methylenchlorid und Monochlorbenzol
Im Verfahrensschritt 2 wird Natronlauge nachdosiert, so daß sich um Umpumpreaktor eine Alkalikonzentration von 0,2 Gew.-% einstellt. Weiterhin wird im Umpumpreaktor 3,0 kg/h Kettenabbrecher-Lösungs, bestehend aus 7,8 Gew.-% Phenol im oben genannten Lösungsmittelgemisch zudosiert.

Beschreibung des Versuchs:
Zu Beginn der Reaktion liegen alle Einsatzstoffe bei etwa 25°C vor. In der Umpumpschleife des Reaktors befindet sich ein Warmetauscher, der die bis dahin gebildete Reaktionswärme auf ein Temperaturniveau um 30°C abführt. An einer Entnahmestelle im Umpumpkreis werden die Proben entnommen und analysiert.

Kontinuierlich werden in einer Ringlochdüse die wäßrige und organische Phase vermischt und - ohne Abfuhr von Wärme - in den Umpumpreaktor geleitet. In der Mischdüse und im Strömungsrohr liegt eine "Wasser-in-Öl"-Emulsion vor.

Mit Hilfe der ATR-IR-Methode wird entlang des Rohres während des Konti-Versuches die Konzentration des Chlorkohlensäureesters gemessen. Der Versuch wurde hinsichtlich des Durchsatzes so gefahren, daß am Ende des Strömungsrohres das Maximum der Konzentration bereits überschritten war. Es wurde dort Natronlauge nachdosiert. Die Zeit zwischen Erreichen des Maximums und der Nachdosierung betrug etwa 2 sec.
- Ergebnis der Probenuntersuchung:: BPA-Restgehalt 400 ppm
Phosgenüberschuß: 10 Mol-%

### Vergleichsbeispiel

Wir im erfindungsgemäßen Beispiel, jedoch unter Zudosierung der Natronlauge in die wäßrige Phase vor dem Zusammenführen in der Ringlochdüse, wird das Produkt an der Entnahmestelle im Umpumpreaktor entnommen.
- Ergebnis der Probenuntersuchung:: BPA-Restgehalt 800 ppm
Phosgenüberschuß 10 Mol-%

## Patentansprüche

1. Verfahren zur kontinuierlichen Herstellung von Polycarbonaten nach der Methode des Zweiphasengrenzflächenverfahrens aus
a) Diphenolen
b) Phosgen
c) gegebenenfalls Kettenabbrechern,
d) gegebenenfalls Katalysatoren und gegebenenfalls
e) Verzweigern,
in einem Gemisch aus wäßrig-alkalischer Phase und organischer Lösungsmittelphase, indem man
1. kontinuierlich die organische Phase und die wäßrige Phase in einem Rohr unter Verwendung eines Mischers zusammenführt,
1.1 wobei die organische Phase ein für das Polycarbonat geeignete Lösungsmittel ist und bereits das Phosgen enthält.
1.2 wobei die wäßrige Phase aus Wasser und einem Gemisch von Alkalihydroxid und phenolischen Komponenten besteht, so daß gerade soviel Alkalihydroxid vorliegt, wie für das Lösen der phenolischen Komponenten bei den Reaktionstemperaturen und -drücken erforderlich ist, und
1.3 wobei die Phasenverhältnisse organische Phase/wäßrige Phase so eingestellt sind, daß sich bei der anschließenden Phosgenreaktion eine Wasser-in-Öl-Emulsion bildet, wobei pro Mol phenolischem OH 0,5 bis 0,7 Mol Phosgen eingesetzt werden,
2. die Bildung von Chlorkohlensäureester-Gruppen am Absorptionsmaximum der Chlorformyl-Bande im IR-Spektrum (aufgenommen mittels der abgeschwächten, totalen Reflexion-IR-Methode) verfolgt, und dabei beim Erreichen der maximalen Chlorkohlensäureesterkonzentration oder bis zu 5 Sekunden danach, Alkalilauge nachdosiert, und zwar so, daß sich eine OH⁻-Konzentration zwischen 0,1 und 0,5 Gew.-% in der wäßrigen Phase einstellt, und gegebenenfalls
3. anschließend das Polycarbonatoligomere mit Polykondensationsgraden von 3 bis 10 Struktureinheiten nach bekannten Verfahren unter Zugabe von Katalysatoren zum hochmolekularem Polycarbonat mit mittleren Gewichtsmittelmolekulargewichten von 5 000 bis 80 000 g/Mol, gemessen in bekannter Weise mittels Gelpermeationschromatographie aufkondensiert, wobei
4. die Emulsion vor, während oder nach der Katalysatorzugabe in eine Öl-in-Wasser-Emulsion umkippt, welche in bekannter Weise aufgetrennt und aufgearbeitet wird.

## Claims

1. A process for the continuous production of polycarbonates by the two-phase interfacial method from
a) diphenols,
b) phosgene,
c) optionally chain terminators,
d) optionally catalysts and optionally
e) branching agents
in a mixture of aqueous alkaline phase and organic solvent phase, characterized in that
1. the organic phase and the aqueous phase are continuously combined in a tube using a mixer,
1.1 the organic phase being a solvent suitable for the polycarbonate and already containing the phosgene,
1.2 the aqueous phase consisting of water and a mixture of alkali metal hydroxide and phenolic components so that just enough alkali metal hydroxide is present to dissolve the phenolic components at the reaction temperatures and pressures and
1.3 the phase ratios of organic phase to aqueous phase being adjusted so that a water-in-oil emulsion is formed during the subsequent phosgene reaction, between 0.5 and 0.7 mol phosgene being used per mol phenolic OH,
2. the formation of chlorocarbonic acid ester groups being followed from the absorption maximum of the chloroformyl band in the IR spectrum (recorded by the attenuated total reflection IR method) and more alkali metal hydroxide being introduced when, up to 5 seconds after, the maximum chlorocarbonic acid ester concentration is reached so that an OH concentration of 0.1 to 0.5% by weight is established in the aqueous phase and optionally
3. the polycarbonate oligomer with degrees of polycondensation of 3 to 10 structural units is condensed in known manner with addition of catalysts to the high molecular weight polycarbonate with average weight average molecular weights of 5,000 to 80,000 g/mole, as measured in known manner by gel permeation chromatography,
4. the emulsion changing before, during or after the addition of catalyst into an oil-in-water emulsion which can readily be separated and worked up in known manner.

## Revendications

1. Procédé pour la préparation continue de polycarbonates par le mode opératoire à l'interface de deux phases, à partir de
a) des diphénols
b) du phosgène
c) le cas échéant des coupeurs de chaîne,
d) le cas échéant des catalyseur et le cas échéant
e) des agents ramifiants,
dans un mélange d'une phase aqueuse alcaline et d'une phase solvant organique, dans lequel
1. on envoie en continu la phase organique et la phase aqueuse, à l'aide d'un mélangeur, dans un conduit tubulaire,
1.1 la phase organique contenant déjà le phosgène dans un solvant approprié pour le polycarbonate,
1.2 la phase aqueuse consistant en eau et un mélange d'hydroxyde alcalin et de composants phénoliques, avec la quantité d'hydroxyde alcalin juste nécessaire pour dissoudre les composants phénoliques aux températures et pressions de réaction, et
1.3 les proportions relatives entre la phase organique et la phase aqueuse étant réglées en ce que, lors de la réaction subséquente avec le phosgène, il se forme une émulsion eau-dans-l'huile, avec mise en oeuvre de 0,5 à 0,7 mol de phosgène par mole d'OH phénolique,
2. on suit la formation des groupes esters chlorocarboniques au maximum d'absorption de la bande des chloroformyles dans le spectre IR (enregistré par la méthode IR de réflexion totale amortie), et, lorsqu'on atteint la concentration maximale en ester chlorocarbonique, ou dans un délai maximum de 5 s après, on ajoute des compléments de lessive alcaline, en quantité telle qu'il s'établisse une concentration en OH de 0,1 à 0,5 % en poids dans la phase aqueuse, et le cas échéant
3. on condense ensuite l'oligomère de polycarbonate à des degrés de polycondensation de 3 à 10 motifs de structure, par des modes opératoires connus, avec adjonction de catalyseurs, en polycarbonate à haut poids moléculaire, c'est-à-dire à un poids moléculaire moyen, moyenne en poids de 5 000 à 80 000 g/mol, la mesure étant faite de manière connue par chromatographie de perméation sur gel,
4. l'émulsion étant inversée, durant ou après l'adjonction de catalyseur, en une émulsion huile-dans-l'eau, qu'on sépare et qu'on traite ensuite de manière connue.
